# EUROPÄISCHE PATENTSCHRIFT

(11) **EP 0 758 434 B1**
(45) Veröffentlichungstag und Bekanntmachung des Hinweises auf die Patenterteilung: **05.01.2000**
(21) Anmeldenummer: 95919362.4
(22) Anmeldetag: 28.04.1995
(51) Int. Cl.: F16D 25/10

(54) **KUPPLUNGSANORDNUNG**
CLUTCH ARRANGEMENT
SYSTEME D'EMBRAYAGE

(30) Priorität: 04.05.1994 DE 4415664
(43) Veröffentlichungstag der Anmeldung: 19.02.1997
(73) Patentinhaber: ZF FRIEDRICHSHAFEN Aktiengesellschaft, 88038 Friedrichshafen (DE)
(72) Erfinder: HAUPT, Josef, D-88069 Tettnang (DE)
(86) Internationale Anmeldenummer: EP9501632
(87) Internationale Veröffentlichungsnummer: WO9530840

(56) Entgegenhaltungen:
- EP-A- 0 102 037
- GB-A- 2 264 152
- US-A- 4 010 833

## Beschreibung

Die Erfindung betrifft eine Kupplungsanordnung nach dem Oberbegriff des ersten Anspruchs.

Eine Kupplung in Lamellenbauweise besteht aus einem ersten Zylinder mit Außenlamellen, einem zweiten Zylinder mit Innenlamellen, einem Kolben und einem Rückstellelement, zum Beispiel Tellerfeder. Beide Zylinder sind im Bereich der Lamellen mit axial verlaufenden Nuten versehen, so daß die Lamellen durch den Kolben axial verschiebbar sind. Die Drehmomentübertragung Zylinder/Lamelle erfolgt formschlüssig, zum Beispiel durch ein Schwalbenschwanz-Profil. Die Kupplung schließt, indem der Kolben die Lamellen gegen einen Endanschlag drückt. Die Kraft zum Verstellen des Kolbens wird zum Beispiel durch ein Druckmedium erbracht. Die Kupplung öffnet, indem die Kraftwirkung des Druckmediums entfällt. Durch das Rückstellelement wird der Kolben in seine Ausgangslage zurückgeschoben. Dadurch wird die reibschlüssige Verbindung der Innen- und Außenlamellen aufgehoben.
Aufgrund der Zentrifugalkraft kommt es zu einer drehzahlabhängigen Verteilung des Druckmediums. Hieraus resultiert als Störgröße eine zusätzliche axiale Kraftkomponente, welche der Kraftrichtung des Kolbens überlagert ist. Diese Störgröße wirkt sich auf den Schließ- und Öffnungsvorgang des Kolbens bzw. der Kupplung aus.

Aus einer Druckschrift, Funktionsbeschreibung 5 HP 30, Seite 2, der ZF Getriebe GmbH Saarbrücken, März 1993, ist ein automatisches Getriebe mit druckausgeglichenen Kupplungen bekannt. Der Druckausgleich dient der Kompensation der durch die Zentrifugalkraft verursachten Störgröße. Die Störgröße wird kompensiert, indem ein zweiter Raum mit Druckmedium beaufschlagt wird. Die hieraus resultierende Kraft ist gleich groß wie die Störgröße. Die Kraftrichtung ist jedoch entgegengesetzt, so daß sich die beiden Kräfte neutralisieren. Dieser zweite Raum setzt sich zusammen aus dem Kolben und einer in axialer Richtung feststehenden Scheibe. In diesem zweiten Raum sitzt auch das Rückstellelement.
Weiters zeigt die Druckschrift eine Kupplungsanordnung mit zwei parallel angeordneten Eingangskupplungen. Hierbei ist der zweite Zylinder der äußeren Eingangskupplung um eine dritte Kupplung herumgeführt.
Die Anordnung hat den Nachteil einer großen axialen Länge.

Die Erfindung hat die Aufgabe, eine einfachere konstruktive Lösung bereitzustellen.

Die Aufgabe wird erfindungsgemäß dadurch gelöst, daß eine erste Kupplung radial um eine zweite Kupplung angeordnet ist und der Ausgleichsraum der ersten Kupplung gebildet wird aus dem Kolben der ersten Kupplung und dem ersten Zylinder der zweiten Kupplung. Durch die Mehrfachverwendung von Bauteilen, d. h. der erste Zylinder der zweiten Kupplung ist zugleich die Scheibe der ersten Kupplung, wird der Vorteil einer kürzeren und kompakteren Bauweise erzielt. Zusätzlich ergibt sich eine Kostenreduktion, da die Anzahl der Bauteile verringert wird.

In einer Ausgestaltung der Erfindung wird vorgeschlagen, daß der erste Zylinder der ersten und zweiten Kupplung von der gleichen Welle angetrieben werden. Hierdurch wird der Vorteil erzielt, daß der Kolben der ersten Kupplung gegenüber dem ersten Zylinder der zweiten Kupplung durch ein einfaches Dichtelement, zum Beispiel O-Ring, abgedichtet sein kann.

In einer Ausgestaltung wird vorgeschlagen, daß eine dritte Kupplung radial um eine vierte Kupplung angeordnet ist, der zweite Zylinder der vierten Kupplung mit dem ersten Zylinder der ersten Kupplung verbunden ist und der zweite Zylinder der dritten Kupplung mit dem ersten Zylinder der vierten Kupplung ein gemeinsames Bauteil darstellt.

In einer weiteren Ausgestaltung der Erfindung wird vorgeschlagen, daß der Ausgleichsraum der ersten Kupplung und der Ausgleichsraum der zweiten Kupplung miteinander in Verbindung stehen. Die Ausgleichsräume der beiden Kupplungen werden über eine gemeinsame Öffnung befüllt.
Diese Anordnung ist besonders dann von Vorteil, wenn sich der Schaltzustand der Kupplungen wechselseitig ändert. Wechselseitig bedeutet, die erste Kupplung öffnet und gleichzeitig schließt die zweite Kupplung oder umgekehrt. Schließt zum Beispiel die erste Kupplung, so verringert sich das Volumen des Ausgleichsraumes. Ein darin sich befindendes Volumen des Druckmediums wird somit in den Ausgleichsraum der öffnenden zweiten Kupplung transportiert. Zusätzlich wird die zweite Kupplung über eine gemeinsame Öffnung mit Druckmedium befüllt. Im Ausgleichsraum der zweiten Kupplung baut sich somit rascher ein Druckniveau auf. Die aus diesem Druckniveau resultierende Kraft hat die gleiche Kraftrichtung wie das Rückstellelement. Der Kolben wird somit rascher in seine Ausgangslage zurückgeführt. Die Kupplung öffnet rascher.

In Ausgestaltung hierzu wird vorgeschlagen, daß die Zufuhröffnung zugleich die Überlauföffnung darstellt. Hierdurch wird der Vorteil erzielt, daß die Überlaufkante der Ausgleichsräume nahe am Wellenzentrum liegt.

In der Zeichnung sind die Ausführungsbeispiele dargestellt.

Es zeigen:
- Fig. 1: einen Längsschnitt einer ersten Kupplungsanordnung und
- Fig. 2: einen Längsschnitt einer zweiten Kupplungsanordnung.

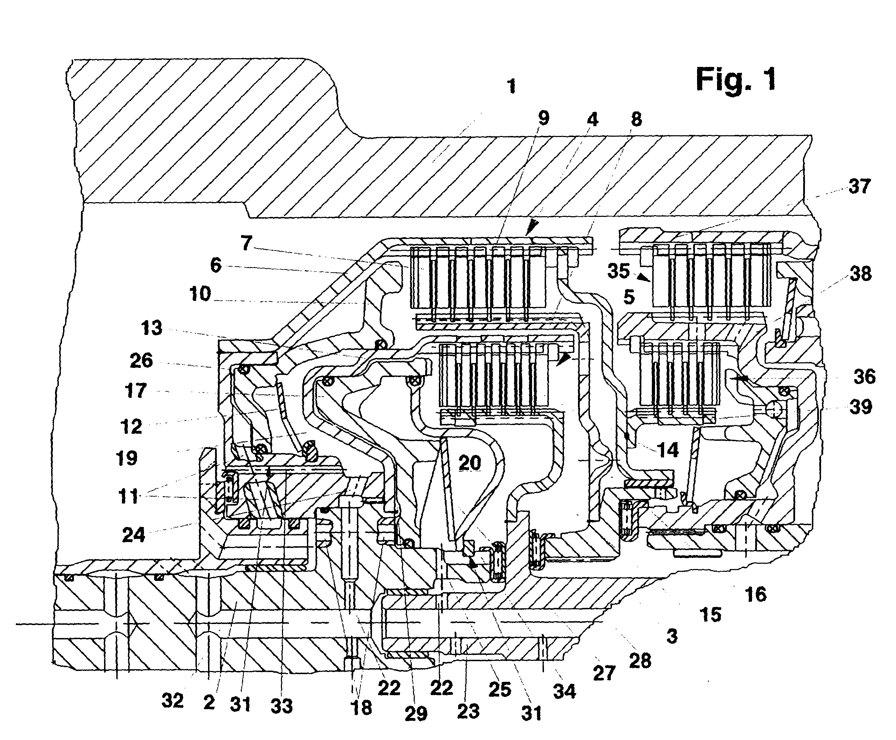

In Fig. 1 dargestellt ist eine erste Kupplungsanordnung, bestehend aus einer ersten Kupplung 4 und einer zweiten Kupplung 5. Die Kupplungen 4 und 5 sind in einem Getriebegehäuse 1 untergebracht. Die erste Kupplung 4 ist radial um die zweite Kupplung 5 angeordnet.
Die erste Kupplung 4 setzt sich zusammen aus einem ersten Zylinder 6 mit Außenlamellen 7, einem zweiten Zylinder 8 mit Innenlamellen 9, einem Kolben 10 und einem Rückstellelement 12, dargestellt ist eine Tellerfeder. Die zweite Kupplung 5 besteht aus einem ersten Zylinder 13 mit Außenlamellen 14, einem zweiten Zylinder 15 mit Innenlamellen 16, einem Kolben 17, einem Rückstellelement 27 und einer Scheibe 28. Die Scheibe 28 ist in axialer Richtung feststehend.
In der dargestellten Anordnung treibt eine erste Welle 2 die ersten Zylinder 6 und 13 der beiden Kupplungen 4 und 5 an. Der Abtrieb der ersten Kupplung 4 erfolgt über eine zweite Welle 3, der Abtrieb der zweiten Kupplung 5 erfolgt über eine dritte Welle 23.
Zu der ersten Kupplung 4 gehört ein Raum 26 und ein erster Ausgleichsraum 19. Der Raum 26 wird gebildet aus dem Kolben 10 und dem ersten Zylinder 6. Der erste Ausgleichsraum 19 wird gebildet aus dem Kolben 10 und dem ersten Zylinder 13 der zweiten Kupplung 5. Zur zweiten Kupplung 5 gehört ein Raum 29 und ein zweiter Ausgleichsraum 20. Der Raum 29 wird gebildet aus dem ersten Zylinder 13 der zweiten Kupplung 5 und dem Kolben 17. Der zweite Ausgleichsraum 20 wird gebildet aus dem Kolben 17 und der Scheibe 28. Wird der Raum 26 bzw. 29 über eine Zuführung 11 bzw. 18 mit Druckmedium befüllt, so verschiebt sich aufgrund der Kraftwirkung der Kolben 10 bzw. 17 in axialer Richtung. Hierdurch schließt die Kupplung 4 bzw. 5. Die Kupplungen 4 oder 5 öffnen, wenn der Raum 26 bzw. 29 belüftet wird. Aufgrund der Zentrifugalkraft verbleibt ein Restvolumen des Druckmediums im Raum 26 bzw. 29. Dieses Restvolumen übt eine axiale Kraft auf den Kolben 10 bzw. 17 aus. Diese axiale Kraft ist der Kraftrichtung des Rückstellelements 12 bzw. 27 entgegengerichtet. Dadurch verzögert sich das Abschalten der ersten Kupplung 4 bzw. zweiten Kupplung 5. Diese Störgröße wird kompensiert, indem im ersten bzw. zweiten Ausgleichsraum 19 bzw. 20 ein entsprechendes Druckniveau eingestellt wird. Hierzu wird über die Zuführung 24 bzw. 25 den beiden Ausgleichsräumen das Druckmedium zugeführt. Die Überlaufkante 31 bestimmt hierbei das Druckniveau. Die Versorgung der Ausgleichsräume mit Druckmedium erfolgt über ein Ölversorgungssystem 32, z. B. Schmiersystem. Die Größe des Zulaufstromes wird über den Durchmesser der Öffnung 22 bestimmt. Ist der Ausgleichsraum 19 bzw. 20 mit Druckmedium gefüllt, so wird das überschüssige Druckmedium über eine Überlaufbohrung 33 bzw. Überlaufnut 34 abgeführt.
Fig. 1 zeigt eine Ausführungsform, bei der jeder der beiden Ausgleichsräume 19 bzw. 20 eine eigene Überlaufkante 31 und eine eigene Öffnung 22 zur Ölversorgung besitzt.
Fig. 1 zeigt eine dritte Kupplung 35 und eine vierte Kupplung 36. Die dritte Kupplung 35 ist radial um die vierte Kupplung 36 angeordnet. Der zweite Zylinder 38 der dritten Kupplung 35 ist zugleich der erste Zylinder der vierten Kupplung 36. Der zweite Zylinder 39 der vierten Kupplung 36 ist mit dem ersten Zylinder 6 der ersten Kupplung 4 verbunden. Der erste Zylinder 37 der dritten Kupplung 35 führt auf eine nicht dargestellte Welle.

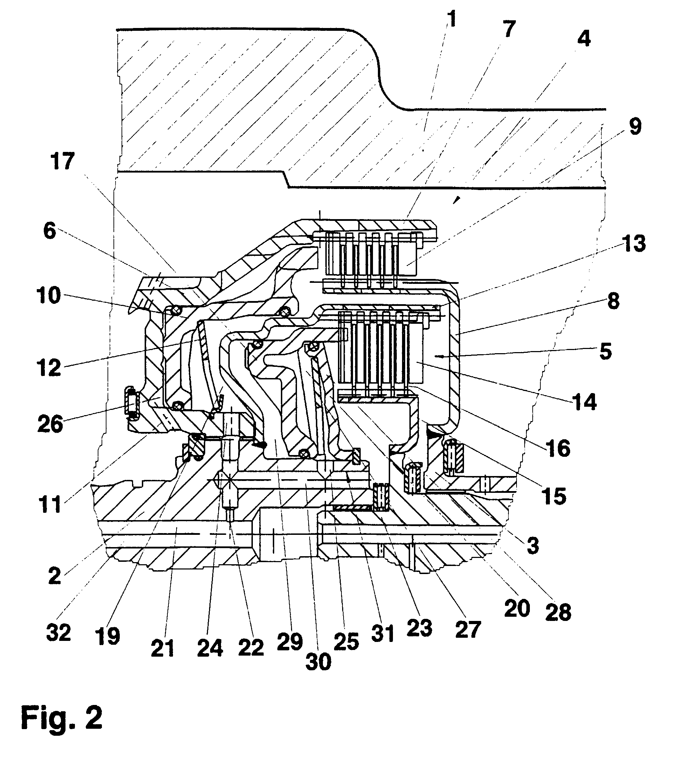

Fig. 2 zeigt eine zweite Ausführungsform der Kupplungsanordnung. Im Unterschied zu Fig. 1 jedoch stehen die beiden Ausgleichsräume 19 bzw. 20 miteinander über die Zuführungen 24, 25 und Bohrung 30 in Verbindung. Die Überlaufkante 31 wird gemeinsam durch die Bohrung 30 für beide Ausgleichsräume 19 bzw. 20 gebildet. Die Zuführung von Druckmedium zu den beiden Ausgleichsräumen 19 bzw. 20 erfolgt über eine Zuführung 21 in der ersten Welle 2 und einer Öffnung 22.
Bei wechselseitigem Verhalten der beiden Kupplungen 4 und 5 schiebt der Kolben der schließenden Kupplung aus seinem Ausgleichsraum das darin enthaltene Volumen des Druckmediums in den Ausgleichsraum der öffnenden Kupplung.
Schließt zum Beispiel die erste Kupplung 4, so schiebt der Kolben 10 das Druckmedium-Volumen des ersten Ausgleichsraumes 19 über die Zuführung 24, Bohrung 30 und Zuführung 25 in den zweiten Ausgleichsraum 20 der zweiten Kupplung 5.
Zusätzlich zu diesem Volumen kommt das Volumen aus der Zuführung 21. Hierdurch baut sich rascher ein entsprechendes Druckniveau im zweiten Ausgleichsraum 20 auf, so daß der Kolben 17 rascher in seine Ausgangsposition zurückgeführt wird. Hierdurch verringert sich die Öffnungszeit der zweiten Kupplung 5. Durch diese Maßnahme verkürzt sich die Sperrzeit bei Wiederholschaltungen.
Das den Ausgleichsräumen 19 bzw. 20 zugeführte Volumen des Druckmediums ist nicht größer als das Volumen bei einer Einzelversorgung, da der Bedarf der Ausgleichsräume 19 bzw. 20 immer zeitlich versetzt auftritt.

### Bezugszeichen

- 1: Getriebegehäuse
- 2: erste Welle
- 3: zweite Welle
- 4: erste Kupplung
- 5: zweite Kupplung
- 6: erster Zylinder
- 7: Außenlamellen
- 8: zweiter Zylinder
- 9: Innenlamellen
- 10: Kolben
- 11: Zuführung
- 12: Rückstellelement
- 13: erster Zylinder
- 14: Außenlamellen
- 15: zweiter Zylinder
- 16: Innenlamellen
- 17: Kolben
- 18: Zuführung
- 19: erster Ausgleichsraum
- 20: zweiter Ausgleichsraum
- 21: Zuführung
- 22: Öffnung
- 23: dritte Welle
- 24: Zuführung
- 25: Zuführung
- 26: Raum
- 27: Rückstellelement
- 28: Scheibe
- 29: Raum
- 30: Bohrung
- 31: Überlaufkante
- 32: Versorgungssystem
- 33: Überlaufbohrung
- 34: Überlaufnut
- 35: dritte Kupplung
- 36: vierte Kupplung
- 37: erster Zylinder
- 38: zweiter Zylinder
- 39: zweiter Zylinder

## Patentansprüche

1. Kupplungsanordnung mit mindestens einer ersten und mindestens einer zweiten Kupplung (4, 5), jede Kupplung bestehend aus einem ersten Zylinder (6, 13) mit Außenlamellen (7, 14), einem zweiten Zylinder (8, 15) mit Innenlamellen (9, 16), einem Kolben (10, 17), der bei Betätigung die Außen- gegen die Innenlamellen drückt, einem Rückstellelement (12, 27), welches den Kolben bei Nichtbetätigung in seine Ausgangslage zurückführt, einer Scheibe (28), welche zusammen mit dem Kolben einen Ausgleichsraum bildet und über den Ausgleichsraum einer Änderung der Anpreßkraft des Kolbens aufgrund der Drehbewegung der Kupplung entgegengewirkt wird, dadurch **gekennzeichnet**, daß die erste Kupplung (4) radial um die zweite Kupplung (5) angeordnet ist und der Ausgleichsraum (19) der ersten Kupplung (4) gebildet wird aus dem Kolben (10) der ersten Kupplung (4) und dem ersten Zylinder (13) der zweiten Kupplung (5).

2. Kupplungsanordnung nach Anspruch 1, dadurch **gekennzeichnet**, daß die ersten Zylinder (6, 13) der ersten und zweiten Kupplung (4, 5) von der gleichen Welle (2) angetrieben werden.

3. Kupplungsanordnung nach Anspruch 1 oder 2, dadurch **gekennzeichnet**, daß eine dritte Kupplung (35) radial um eine vierte Kupplung (36) angeordnet ist, der zweite Zylinder (39) der vierten Kupplung (36) mit dem ersten Zylinder (6) der ersten Kupplung (4) verbunden ist und der zweite Zylinder (38) der dritten Kupplung (35) mit dem ersten Zylinder der vierten Kupplung (36) ein gemeinsames Bauteil darstellt.

4. Kupplungsanordnung nach Anspruch 1, 2 oder 3, dadurch **gekennzeichnet**, daß der Ausgleichsraum (19) der ersten Kupplung (4) und der Ausgleichsraum (20) der zweiten Kupplung (5) miteinander in Verbindung stehen und über eine gemeinsame Öffnung (22) befüllt werden.

5. Kupplungsanordnung nach Anspruch 4, dadurch **gekennzeichnet**, daß die Zuführung (24, 25) zugleich die Überlaufbohrung (33) bzw. Überlaufnut (34) darstellen.

## Claims

1. Clutch arrangement having at least one first and at least one second clutch (4, 5), each clutch comprising a first cylinder (6, 13) with outer discs (7, 14), a second cylinder (8, 15) with inner discs (9, 16), a piston (10, 17) which upon operation presses the outer discs against the inner discs, a resetting element (12, 27) which returns the piston upon non-operation into its original position, a disk (28) which together with the piston forms a compensation chamber and via the compensation chamber counteracts a change of the contact pressure of the piston on account of the rotation of the clutch, characterized in that the first clutch (4) is disposed radially around the second clutch (5) and the compensation chamber (19) of the first clutch (4) is formed by the piston (10) of the first clutch (4) and the first cylinder (13) of the second clutch (5).

2. Clutch arrangement according to claim 1, characterized in that the first cylinders (6, 13) of the first and second clutch (4, 5) are driven by the same shaft (2).

3. Clutch arrangement according to claim 1 or 2, characterized in that a third clutch (35) is disposed radially around a fourth clutch (36), the second cylinder (39) of the fourth clutch (36) is connected to the first cylinder (6) of the first clutch (4), and the second cylinder (38) of the third clutch (35) with the first cylinder of the fourth clutch (36) is a common component.

4. Clutch arrangement according to claim 1, 2 or 3, characterized in that the compensation chamber (19) of the first clutch (4) and the compensation chamber (20) of the second clutch (5) are connected to one another and filled through a common opening (22).

5. Clutch arrangement according to claim 4, characterized in that the feed lines (24, 25) are simultaneously the overflow bore (33) and overflow groove (34) respectively.

## Revendications

1. Ensemble d'embrayages avec au moins un premier et au moins un deuxième embrayage (4, 5), chaque embrayage se composant d'un premier cylindre (6, 13) avec des disques externes (7, 14), d'un deuxième cylindre (8, 15) avec des disques internes (9, 16), d'un piston (10, 17) poussant les disques externes contre les disques internes lorsqu'il est activé, d'un élément de rappel (12, 27) ramenant le piston à sa position initiale lorsqu'il n'est pas activé, d'un disque (28) formant ensemble avec le piston une chambre de compensation et s'opposant par l'intermédiaire de la chambre de compensation à une variation de la force de pression du piston en raison d'un mouvement rotatif de l'embrayage, **caractérisé** en ce que le premier embrayage (4) est disposé radialement autour du deuxième embrayage (5) et en ce que la chambre de compensation (19) du premier embrayage (4) est formée par le piston (10) du premier embrayage (4) et par le premier cylindre (13) du deuxième embrayage (5).

2. Ensemble d'embrayages selon la revendication 1, **caractérisé** en ce que les premiers cylindres (6, 13) du premier et du deuxième embrayage (4, 5) sont entraînés par le même arbre (2).

3. Ensemble d'embrayages selon la revendication 1 ou 2, **caractérisé** en ce qu'un troisième embrayage (35) est disposé radialement autour d'un quatrième embrayage (36), le deuxième cylindre (39) du quatrième embrayage (36) étant relié au premier cylindre (6) du premier embrayage (4) et en ce que le deuxième cylindre (38) du troisième embrayage (35) forme un élément de construction commun avec le premier cylindre du quatrième embrayage (36).

4. Ensemble d'embrayages selon la revendication 1, 2 ou 3, **caractérisé** en ce que la chambre de compensation (19) du premier embrayage (4) et la chambre de compensation (20) du deuxième embrayage (5) communiquent entre elles et sont remplies au moyen d'un orifice commun (22).

5. Ensemble d'embrayages selon la revendication 4, **caractérisé** en ce que les amenées (24, 25) formentt en même temps l'orifice de trop-plein (33), respectivement la rainure de trop-plein (34).
